# EUROPEAN PATENT SPECIFICATION

(11) **EP 1 143 154 B1**
(45) Date of publication and mention of the grant of the patent: **09.11.2005**
(21) Application number: 01201294.4
(22) Date of filing: 09.04.2001
(51) Int. Cl.: F16B 2/02, F16B 7/04, H02G 3/04

(54) **Cable duct and clamping bracket therefor**
Kabelkanal und dafür geeignete Klemmschelle
Conduite de câble et étrier de fixation associé

(30) Priority: 07.04.2000 NL 1014901
(43) Date of publication of application: 10.10.2001
(73) Proprietor: Gouda Holland B.V., 2851 AW Haastrecht (NL)
(72) Inventor: Boer, Dirk René, 2851 VS Haastrecht (NL); van Leeuwen, Isaak Marinus, 2861 VN Bergambacht (NL)
(74) Representative: 't Jong, Bastiaan Jacobus

(56) References cited:
- WO-A-97/15774
- GB-A- 2 114 820

## Description

The invention relates to a cable duct and a clamping bracket according to the preamble of claim 1.

Such cable ducts and clamping brackets for clamping thereof onto steel constructions are generally available commercially. GB 2 114 820-A discloses a cable ladder, wherein the duct is supported and clamped according to a first embodiment with clamping plate. In a different embodiment shows the cable ladder supported by a frame. The clamping plate is replaced by a holding plate, wherein this plate has a hooked formation and embraces the flange of the duct. There is no fixation by clamping of the ladder relative to the support by these means.

A problem with the known cable duct and clamping bracket is that it is not designed to multipurpose for any combination of clamping bracket and cable duct. The invention intends to provide a cable duct and clamping bracket therefor, which is multipurpose. Such a cable duct is obtained according to claim 1. A clamping bracket having a V-shaped wing, is well suited for any kind of cable duct for clamping the cable duct and still providing some degrees of free movement in the length direction of said duct.

The degree of freedom in the length direction is needed in respect of the linear expansion of solid materials when there are temperature differences. They will core in long straight lengths of mounded cable duct in expansion which in terms of amount depends on the chosen material in the degree of difference between the highest and lower temperature. In order to prevent deformation of the cable duct route as a result hereof, the support construction and the manner in which the cable ducts are mounted thereon must be taken into account during assembly.

According to the invention steel cable ducts are clamped onto steel constructions in a manner such that the cable ducts are fixed in width direction to the steel construction, but can slide freely in the longitudinal direction over said steel construction in order to prevent deformation if the cable duct as a result of thermal expansion.

For cable duct in the material stainless steel and steel linear expansion can be determined at specific temperature differences. In order to prevent deformation an expansion space must be kept clear at mutual intervals between the cable ducts. The ducts can be joined together in situ using an expansion coupling the plate which is fastened on one side in the normal manner and is fixed on the other side by means of locking nuts. The cable duct route can hereby expand without deforming. The mutual distance between the support constructions on the route where the expansion occurs has to be adjusted depending on the anticipated load of the cable duct route and the type of cable duct used.

The maximal span of a usual cable duct amounts to about 6 metres, depending on the load and embodiment.

In order to allow the cable duct to slide freely over the steel construction in case of thermal expansion a fixing bracket according to the invention is applied which does fix the duct to the steel construction in width direction, but which allows the cable duct to move freely over the steel construction in length direction.

The invention is further elucidated in the following description of embodiments with reference to the annexed figures.
Figure 1 shows a perspective view of a cable duct according to the invention.
Figure 2 shows a detail according to arrow II in figure 1.
Figure 3 shows a clamping bracket applied in the construction of figures 1 and 2.
Figure 4 shows a view according to arrow IV in figure 2.

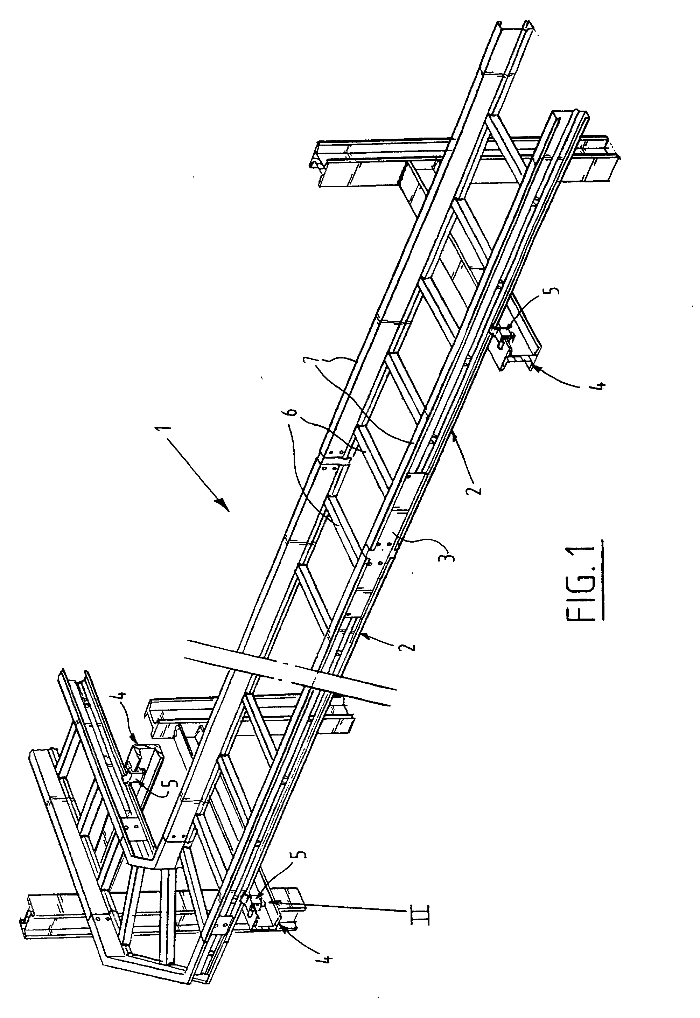

The cable duct 1 shown in figure 1 comprises an elongate duct part 2 which is clamped fixedly to a construction 4 by means of clamping brackets 5. Construction 4 is for instance a frame of a petrochemical installation. In petrochemical installations and the like in situ drilling for mounting cable ducts and the like is not allowed in respect of explosion hazard. Cable ducts of the present type are therefore fixed using clamping brackets.

Duct part 2 is here drawn assembled from a number of elements, which are for instance mutually connected with expansion coupling plates 3 in order to enable the absorption of a certain variation in the longitudinal direction as a consequence of thermal expansion.

Each element of duct part 2 is constructed here from two longitudinal beams 7 and cross beams 6 arranged therebetween. Longitudinal beams 7 protrude above the level of cross beams 6 so that a duct is formed in which cables and the like can be laid.

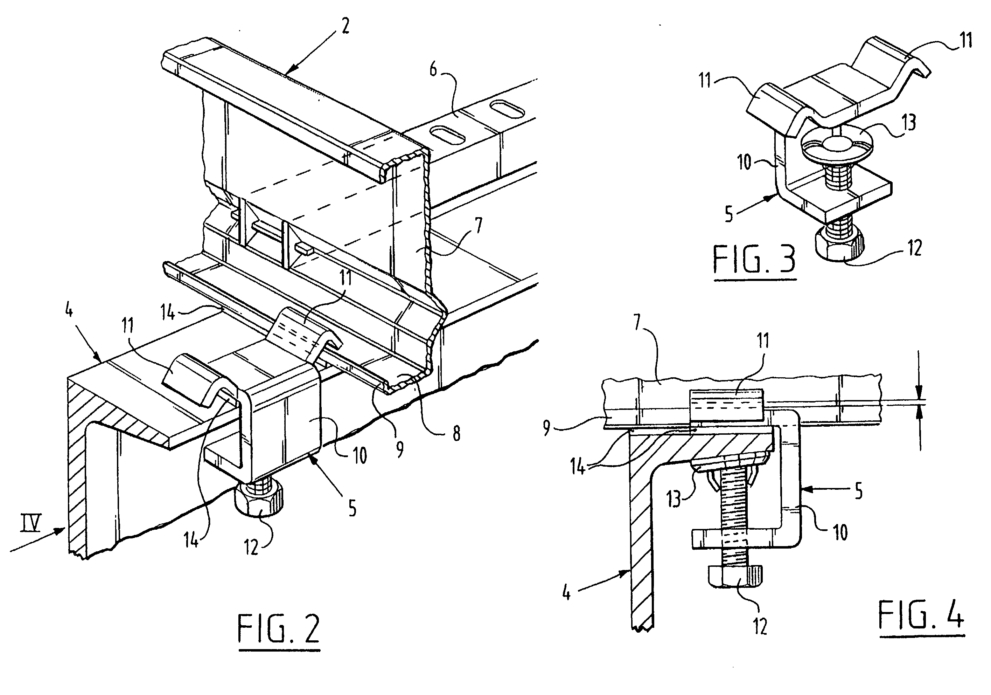

As figure 2 shows, an outward pointing flange 8 is formed on the underside of longitudinal beam 7, which flange bears an end edge 9 which is folded upward.

In the preferred embodiment shown here the bracket 5 comprises a U-shaped body 10 with a first leg situated at the top in the figure from which two wings 11 protrude laterally. Wings 11 have an end edge at a level which is at a distance from a surface of this leg directed toward the interior of the U. In the mounted situation this end edge is hereby at a distance from the supporting surface formed by construction 4 such that flange 8 can be received with clearance under this end edge. The upright end edge 9 of flange 8 falls beneath the bent form of wing 11 and is thereby enclosed laterally. Duct part 2 can thus slide over structural part 4 in length direction, but not in the transverse direction thereof.

Bracket 5 is clamped fixedly on the upper flange of structural part 4 using a screw bolt 12. On its end protruding into the interior of the U the screw bolt 12 bears a cup ring 13, which ensures a good contact against the sloping underside of the flange of structural part 4.

If different types of material are applied on top of each other, for instance hot-galvanized steel and stainless steel, an isolation strip 14 is placed between support construction 4 and cable duct 2, and likewise on the inner side of screw clamp 5, in order to prevent contact erosion.

## Claims

1. Cable duct (1) comprising an elongate duct part (2) and a number of clamping brackets (5) for fixedly clamping the duct part (2) to a construction (4), at least one clamping bracket (5) comprises a wing (11) having a V-shaped cross section with an edge in the length direction for fixing the duct part (2) transversely of a length direction and leaving it free in the length direction.

2. Cable duct (1) as claimed in claim 2, wherein the clamping bracket (5) comprises a clamping part and at least one enclosing part protruding therefrom, wherein the duct part (2) comprises a flange (8) with an end edge (9) folded upward thereon, and the enclosing part comprises the wing (11) which in the mounted situation encloses the end edge (9) with clearance.

3. Clamping bracket (5) for a cable duct (1) as claimed in any of the foregoing claims, **characterized in that** the clamping bracket (5) fixes the duct part (2) transversely of the length direction with a wing (11) having a V-shaped cross section with an edge in the length direction.

4. Clamping bracket (5) as claimed in claim 4, wherein comprising a clamping part and an enclosing part protruding therefrom and the clamping part comprises a U-shaped body (10) with a first leg from which at least one wing (11) protrudes laterally which has an end edge parallel to and at a level which is at a distance from a surface of this leg directed toward the interior of the U.

5. Clamping bracket (5) as claimed in claim 4 , wherein the U-shaped body comprises a second leg lying opposite the first leg and provided with a threaded hole in which a screw element (12) is received.

6. Clamping bracket (5) as claimed in claim 5 , wherein the screw element (12) bears a cup ring (13) on its end protruding into the interior of the U.

## Patentansprüche

1. Kabelkanal (1) umfassend ein längliches Kanalteil (2) und mehrere Klemmschellen (5) zum Festklemmen des Kanalteils (2) an einer Konstruktion (4), wobei wenigstens eine Klemmschelle (5) einen Flügel (11) mit einem V-förmigen Querschnitt hat, mit einer Kante in Längsrichtung, zum Befestigen des Kanalteils (2) quer zu einer Längsrichtung und um dieses in der Längsrichtung freizulassen.

2. Kabelkanal (1) nach Anspruch 1, bei welchem die Klemmschelle (5) ein Klemmteil und wenigstens ein davon vorstehendes, umschließendes Teil umfaßt, wobei das Kanalteil (2) einen Flansch (8) mit einem Endrand (9) umfaßt, der darauf nach oben gebogen ist und das umschließende Teil den Flügel (11) umfaßt, der in der montierten Situation die Endkante (9) mit Freiraum umschließt.

3. Klemmschelle (5) für einen Kabelkanal (1) nach einem der vorstehenden Ansprüche, **dadurch gekennzeichnet, daß** die Klemmschelle (5) das Kanalteil (2) quer zu der Längsrichtung mit einem Flügel (11) fixiert, der einen V-förmigen Querschnitt mit einem Rand in Längsrichtung, hat.

4. Klemmschelle (5) nach Anspruch 3, die ein Klemmteil und ein davon vorstehendes, umschließendes Teil umfaßt und wobei das Klemmteil einen U-förmigen Körper (10) umfaßt mit einem ersten Schenkel, von dem wenigstens ein Flügel (11) seitlich vorsteht, der einen Endrand hat, der parallel zu und auf einem Niveau ist in einem Abstand in Bezug auf eine Oberfläche dieses Schenkels und in Richtung des Inneren des U's gerichtet ist.

5. Klemmschelle (5) nach Anspruch 4, bei welcher der U-förmige Körper einen zweiten Schenkel umfaßt, der gegenüber dem ersten Schenkel liegt und mit einem Gewindeloch versehen ist, in dem ein Schraubenelement (12) aufgenommen ist.

6. Klemmschelle (5) nach Anspruch 5, bei welcher das Schraubenelement (12) auf seinem in das Innere des U's ragenden Ende einen Schalenring (13) trägt.

## Revendications

1. Conduite de câble (1) comprenant une partie de conduite allongée (2) et un nombre d'étriers de fixation (5) destinés à fixer à demeure la partie conduite (2) à une construction (4), au moins un étrier de fixation (5) comprend une aile (11) présentant une section transversale en forme de V avec une arête dans la direction longitudinale afin de fixer la partie conduite (2) transversalement à une direction longitudinale et la laissant libre dans la direction longitudinale.

2. Conduite de câble (1) selon la revendication 1, dans lequel l'étrier de fixation (5) comprend une partie de fixation et au moins une partie d'enveloppe en saillie par rapport à celle-ci, dans laquelle la partie conduite (2) comprend une bride (8) avec un rebord d'extrémité (9) replié vers le haut sur celui-ci, et la partie d'enveloppe comprend l'aile (11) qui, dans la situation montée, enveloppe le rebord d'extrémité (9) avec un jeu.

3. Etrier de fixation (5) pour une conduite de câble (1) selon l'une quelconque des revendications précédentes, **caractérisé en ce que** l'étrier de fixation (5) assure la fixation de la partie conduite (2) transversalement à la direction longitudinale avec une aile (11) présentant une section transversale en forme de V avec une arête dans la direction longitudinale.

4. Etrier de fixation (5) selon la revendication 3, comprenant une partie de fixation et une partie d'enveloppe en saillie à partir de celle-ci et la partie de fixation comprend un corps en forme de U (10) avec une première patte à partir de laquelle fait saillie latéralement au moins une aile (11) qui comporte une arête d'extrémité parallèle à une surface de cette patte orientée vers l'intérieur du U et à un niveau qui est à une distance de cette dernière.

5. Etrier de fixation (5) selon la revendication 4, dans lequel le corps en forme de U comprend une seconde patte agencée à l'opposé de la première patte et comportant un orifice fileté dans lequel est reçue une vis (12).

6. Etrier de fixation (5) selon la revendication 5, dans lequel la vis (12) supporte une bague en coupelle (13) sur son extrémité en saillie vers l'intérieur du U.
